# EUROPEAN PATENT APPLICATION

(11) **EP 1 795 980 A1**
(43) Date of publication of application: **13.06.2007**
(21) Application number: 06025352.3
(22) Date of filing: 07.12.2006
(51) Int. Cl.: G05B 17/02, G05B 23/02

(54) **Plant simulator**

(30) Priority: 08.12.2005 JP 2005355136
(71) Applicant: KABUSHIKI KAISHA TOSHIBA, Tokyo 105-8001 (JP)
(72) Inventor: Kato, Takahisa, Minato-ku Tokyo (JP); Kawai, Kensuke, Minato-ku Tokyo (JP); Otsuka, Hirokazu, Minato-ku Tokyo (JP); Otsuka, Yukio, Minato-ku Tokyo (JP)
(74) Representative: HOFFMANN EITLE

(57) **Abstract**

A plant simulator which makes it possible to set factors which could invite a system accident and to simulate the process of occurrence of a system accident. The plant simulator has a plant monitoring and operation unit 300 which displays on a display screen parameters and the plant status computed by a plant simulation unit and, by using this display screen, gives the plant simulation unit the operation performed on the plant; and a simulation instructing unit 100 which, connected to a terminal screen, gives the plant simulation unit the setting of initial values necessary for simulation from this terminal screen and a demand instruction, which may be to demand discontinuation of the execution of simulation, the plant simulator simulating a system accident according to a control model and a plant model, further including a system accident factor database 504 in which action logics of system accident factors matching the control model are stored; a system accident factor selecting unit 500 having a selecting device for taking out data stored in this system accident factor database; and a system accident executing unit 400 which executes a system accident on the basis of data taken out of the system accident factor selecting unit, whereby the system accident is simulated.

## Description

### BACKGROUND OF THE INVENTION

### Field of the Invention

The present invention relates to a plant simulator which simulates the behavior of a plant, and more particularly to a plant simulator capable of setting factors of a system accident which could make the plant uncontrollable and invite a breakdown and simulating the process leading to such a system accident.

### Related Art

Today's plants, whose monitoring and control are digitized, are expanded in the range of automatic control related to the protection of plants themselves and of constituent equipment items. For this reason, any simple equipment trouble would be taken care of by automatic control without requiring manual intervention.

On the other hand, if the circuit for protection by automatic control is disabled by accidental occurrence of a chain of unexpected troubles due to improper maintenance or deterioration of the equipment aggravated by a design error or some other human error, manual intervention by an operator accustomed to operation under automatic control will be unable to cope with the consequences of such troubles, which might develop into a catastrophe.

### SUMMARY OF THE INVENTION

Therefore, a plant simulator has to be so configured as to be able to simulate a serious accident and to allow a drill to cope with such an accident to be conducted.

However, even if techniques to simulate accidents or troubles, typically malfunctioning (see Japanese Patent Publication No. 1989-039589 and Japanese Patent Publication No. 1989-045638), are utilized in a conventional plant simulator, no drill against system accidents can be effectively accomplished. The system accident in this context means what is triggered by some trouble with a system component (hardware), followed by unexpected interactions among subsystems (including the human operator) repeated more than once, and eventually developing into a catastrophe.

An object of the present invention, attempted in view of the problem noted above, is to provide a plant simulator which makes it possible to set factors which could invite a system accident leading to a catastrophe of inability to control the plant due to complex interactions of such factors and to simulate the process of occurrence of a system accident.

In order to achieve this object, according to the invention,
there is provided a plant simulator having a plant simulation unit which simulates the behavior of a plant; a plant monitoring and operation unit which displays on a display screen parameters and the plant status computed by this plant simulation unit and, by using this display screen, gives the plant simulation unit the operation performed on the plant; and a simulation instructing unit which, connected to a terminal screen, gives the plant simulation unit the setting of initial values necessary for simulation from this terminal screen and a demand instruction, which may be to demand discontinuation of the execution of simulation, the plant simulator simulating a system accident according to a control model and a plant model, further comprising a system accident factor database in which action logics of system accident factors matching the control model are stored; a system accident factor selecting unit having a selecting device for taking out data stored in this system accident factor database; and a system accident executing unit which executes a system accident on the basis of data taken out of the system accident factor selecting unit, whereby the system accident is simulated.

The present invention, as stated above, can simulate all kinds of system accidents as it is so configured as to simulate accidents including accidents attributable to the control logic as per each control model, and therefore can give the trainees highly advanced drills.

### BRIEF DESCRIPTION OF THE DRAWINGS

FIG. 1 is a block diagram showing the configuration of a first embodiment of the present invention;
FIG. 2 is a block diagram showing the configuration of second through fifth embodiments of the invention;
FIG. 3 is a block diagram showing the configuration of a sixth embodiment of the invention; and
FIG. 4 is a block diagram showing the configuration of seventh and eighth embodiments of the invention.

### DETAILED DESCRIPTION OF THE INVENTION

The embodiments of the invention will be described with reference to the accompanying drawings.

### (1) First Embodiment

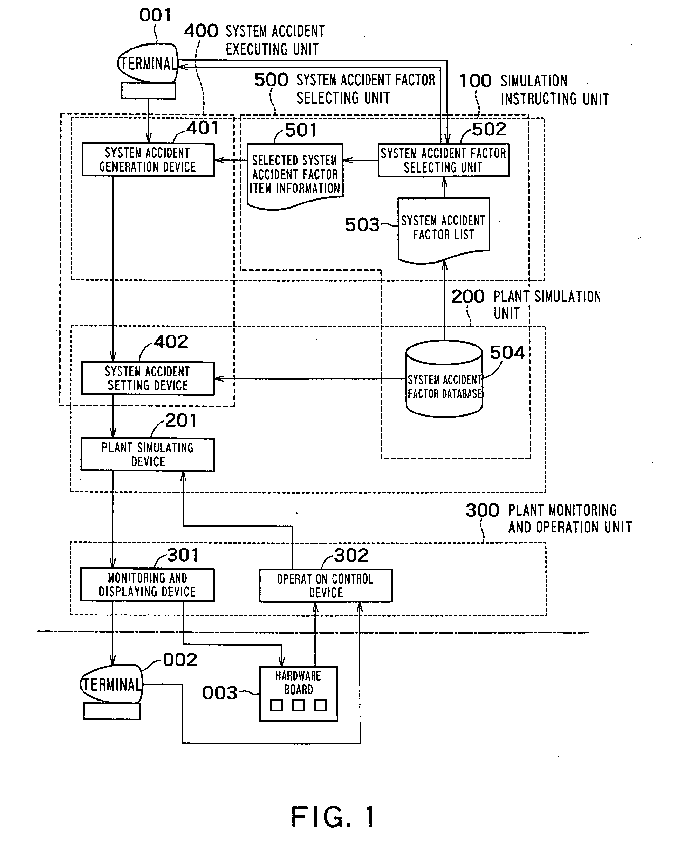

FIG. 1 is a block diagram showing the configuration of the first embodiment of the invention. Referring to FIG. 1, when a demand for actuation of system accident trigger setting is issued by a terminal 001 for instructing simulation, a system accident factor selecting device 502 displays a system accident factor list 503 on the terminal 001 for instructing simulation.

This system accident factor list 503 tabulates the item names and descriptions of all the system accident factors matching a system accident factor database 504 storing the action logic of every system accident factor.

When the terminal 001 for instructing simulation selects any system accident factor item out of this list and issues a selection demand, the system accident factor selecting device 502 sets the selected system accident item information in selected system accident factor item information 501.

When the terminal 001 for instructing simulation issues a system accident generation demand, a system accident generation device 401 outputs system accident factor item information set in the selected system accident item information 501 to a system accident setting device 402.

The system accident setting device 402 acquires from the system accident factor database 504 the action logic of the system accident factor pertinent to the system accident factor item information, and supplies it to a plant simulating device 201. The plant simulating device 201 incorporates the action logic of the system accident factor to simulate the plant, and thereby simulates the system accident.

The plant parameters and the plant status when simulating the system accident are displayed on a terminal 002 for plant monitoring and operation and a hardware board 003 via a monitoring and displaying device 301. And it is judged whether the operation performed from the terminal 002 for plant monitoring and operation and the hardware board 003 via an operation control device 302 is appropriate or inappropriate.

This first embodiment can provide a plant simulator capable of simulating system accidents.

### (2) Second through Fifth Embodiments

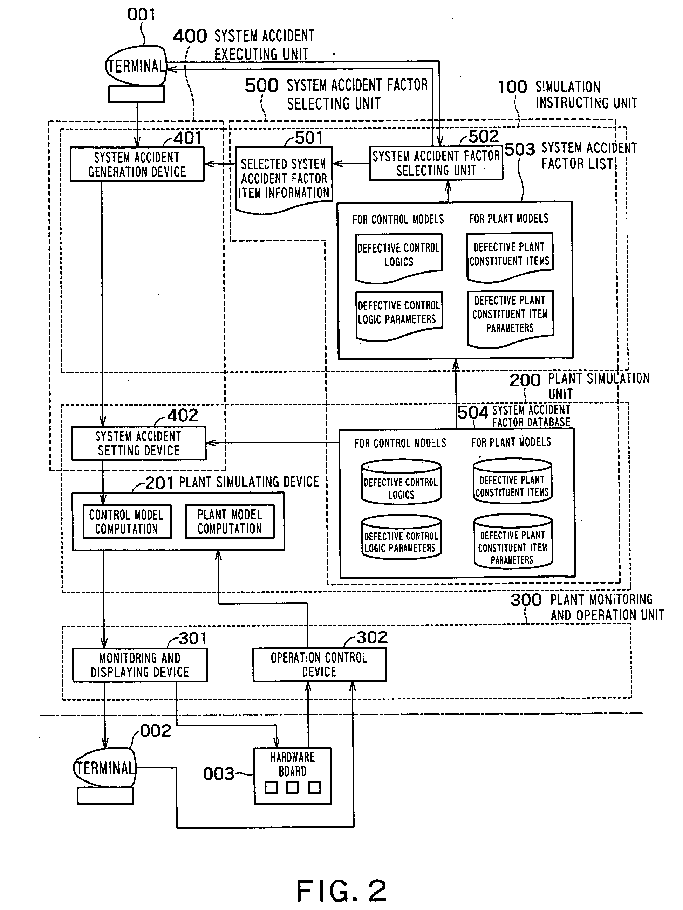

FIG. 2 is a block diagram showing the configuration of the second through fifth embodiments of the invention.

### (2-1) Second Embodiment

Referring to FIG. 2, the system accident factor database 504 and the system accident factor list 503 contain defective control logics and item information for control models, which are system accident factors.

When item information, which is the supposed system accident factor, is entered, the system accident setting device 402 acquires from the system accident factor database 504 the defective control logic for the pertinent control model, and supplies it for control model computation by the plant simulating device 201.

The control model computation by the plant simulating device 201 replaces the normal control logic with the acquired defective control logic and simulates the plant on that basis to simulate the system accident.

This second embodiment can provide a plant simulator capable of simulating system accidents imaging design errors in plant control unlike conventional accidents due to mere plant control failure because it replaces the control logic itself in the control model with a defective control logic.

Furthermore, as the control logic itself is replaced unlike in the conventional status value altering system, the trainees cannot find the defective part unless they have knowledge on control logics even if they confirm the status of the plant control logic at the terminal for plant monitoring and operation. Therefore, this simulator has an additional advantage of enabling the trainees to increase their knowledge on control logics through the drills.

### (2-2) Third Embodiment

Also referring to FIG. 2, the system accident factor database 504 and the system accident factor list 503 contain defective control logic parameters and item information for control models, which are system accident factors.

When item information, which is the supposed system accident factor, is entered, the system accident setting device 402 acquires from the system accident factor database 504 the defective control logic parameters for the pertinent control model, and supplies them for control model computation by the plant simulating device 201.

The control model computation by the plant simulating device 201 replaces the normal control logic parameters with the acquired defective control logic parameters and simulates the plant on that basis to simulate the system accident.

This third embodiment can provide a plant simulator capable of simulating system accidents imaging human errors in plant control unlike conventional accidents due to mere plant control failure because it replaces the control logic parameters in the control model with defective control logic parameters.

Furthermore, as the control logic parameters are replaced unlike in the conventional status value altering system, the trainees cannot find the defective part unless they have knowledge on control logic parameters even if they confirm the status of the plant control logic at the terminal 002 for plant monitoring and operation. Therefore, this simulator has an additional advantage of enabling the trainees to increase their knowledge on the control constants of control logics through the drills.

### (2-3) Fourth Embodiment

Also referring to FIG. 2, the system accident factor database 504 and the system accident factor list 503 contain defective plant constituent items and item information for plant models, which are system accident factors.

When item information, which is the supposed system accident factor, is entered, the system accident setting device 402 acquires from the system accident factor database 504 the defective plant constituent item for the pertinent plant model, and supplies it for control model computation by the plant simulating device 201.

The control model computation by the plant simulating device 201 replaces the normal plant constituent item with the acquired defective plant constituent item and simulates the plant on that basis to simulate the system accident.

This fourth embodiment can provide a plant simulator capable of simulating system accidents imaging errors in the maintenance of plant constituent items unlike conventional accidents due to mere failure of the plant constituent items because it replaces the plant constituent item in the plant model with a defective one.

Furthermore, as the plant constituent item is replaced unlike in the conventional status value altering system, the trainees cannot find the defective part unless they have knowledge on plant constituent items even if they confirm the status of the plant control logic at the terminal 002 for plant monitoring and operation. Therefore, this simulator has an additional advantage of enabling the trainees to increase their knowledge on plant constituent items through the drills.

### (2-4) Fifth Embodiment

Also referring to FIG. 2, the system accident factor database 504 and the system accident factor list 503 contain defective plant constituent item parameters and item information for plant models, which are system accident factors.

When item information, which is the supposed system accident factor, is entered, the system accident setting device 402 acquires from the system accident factor database 504 the defective plant constituent item parameters for the pertinent plant model, and supplies them for control model computation by the plant simulating device 201.

The control model computation by the plant simulating device 201 replaces the normal plant constituent item parameters with the acquired defective plant constituent item parameters and simulates the plant on that basis to simulate the system accident.

This fifth embodiment can provide a plant simulator capable of simulating system accidents imaging deterioration in plant constituent items unlike conventional accidents due to mere failure of the plant constituent items because it replaces the plant constituent item parameters in the plant model with defective ones.

Furthermore, as the plant constituent item parameters are replaced unlike in the conventional status value altering system, the trainees cannot find the defective part unless they have knowledge on plant constituent item parameters even if they confirm the plant line status at the terminal 002 for plant monitoring and operation. Therefore, this simulator has an additional advantage of enabling the trainees to increase their knowledge on the characteristics of plant constituent items through the drills.

### (3) Sixth Embodiment

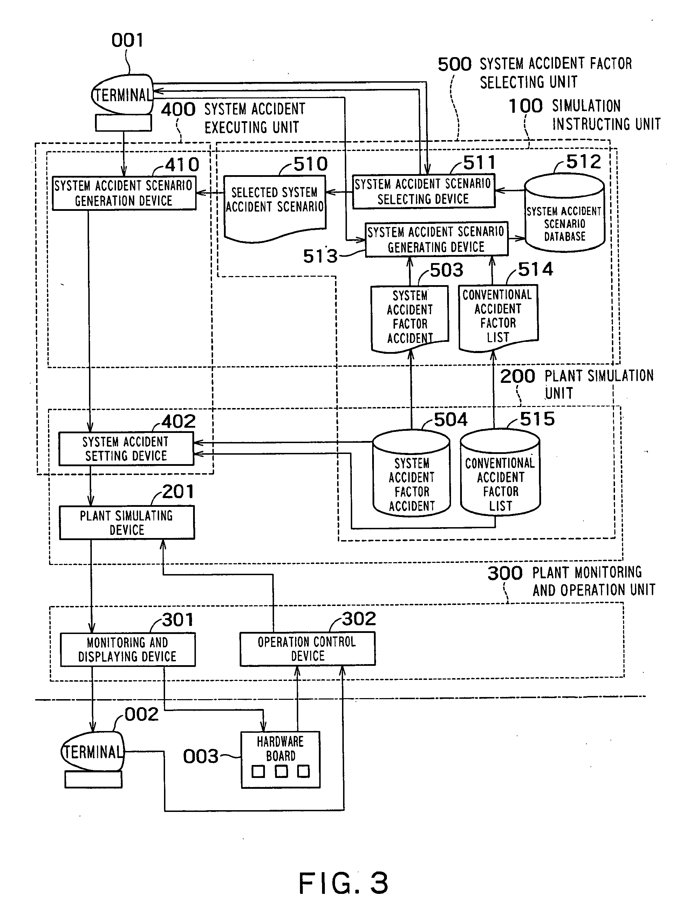

FIG. 3 is a block diagram showing the configuration of the sixth embodiment of the invention. Referring to FIG. 3, when the terminal 001 for instructing simulation issues a system accident scenario generation actuating demand, a system accident scenario generating device 513 displays the system accident factor list 503 and a conventional accident factor list 514 at the terminal 001 for instructing simulation.

In the system accident factor list 503, the item names and descriptions of all the system accident factors matching the system accident factor database 504 storing the action logics of all the system accident factors are listed. In the conventional accident factor list 514, the item names and descriptions of all the conventional accident triggers matching a conventional accident factor database 515 storing the action logics of all the conventional accident factors are listed.

From this list, the terminal 001 for instructing simulation selects a system accident factor or factors and a conventional accident factor or factors, and issues a generation demand with conditions such as time and plant status attached to it. Then, the system accident scenario generating device 513 generates a system accident scenario by attaching conditions such as time and plant status to information on the selected system accident factor item or items and information on the selected conventional accident factor item or items, and stores it into a system accident scenario database 512.

When the terminal 001 for instructing simulation issues a system accident scenario setting actuation demand, a system accident scenario selecting device 511 displays a list of all the system accident scenarios stored in the system accident scenario database 512.

When the terminal 001 for instructing simulation selects any system accident scenario out of this list and issues a selection demand, the system accident scenario selecting device 511 sets the selected system accident scenario to a selected system accident scenario 510.

When the terminal 001 for instructing simulation issues a system accident scenario generation demand, a system accident generating device 410 supplies the system accident setting device 402 with the system accident scenario set in the selected system accident scenario 510.

The system accident setting device 402 acquires from the system accident factor database 504 and the conventional accident factor database 515 the pertinent system accident triggering logic and conventional accident triggering logic according to the system accident scenario, and supplies it to the plant simulating device 201 with such conditions as time and plant status set in the system accident scenario taken into consideration.

The plant simulating device 201, incorporating the system accident triggering logic and the conventional accident triggering logic, performs simulation of the plant to simulate the system accident.

The plant parameters and the plant status at the time of system accident simulation are displayed on the terminal 002 for plant monitoring and operation and the hardware board 003 via the monitoring and displaying device 301, and operations performed from the terminal 002 for plant monitoring and operation and the hardware board 003 via the operation control device 302 may be forbidden as a result of simulation.

This sixth embodiment can provide a plant simulator capable of simulating system accident scenarios by generating a system accident event or events and a conventionally known plant accident event or events with such conditions as time and plant status attached to it.

### (4) Seventh and Eighth embodiments

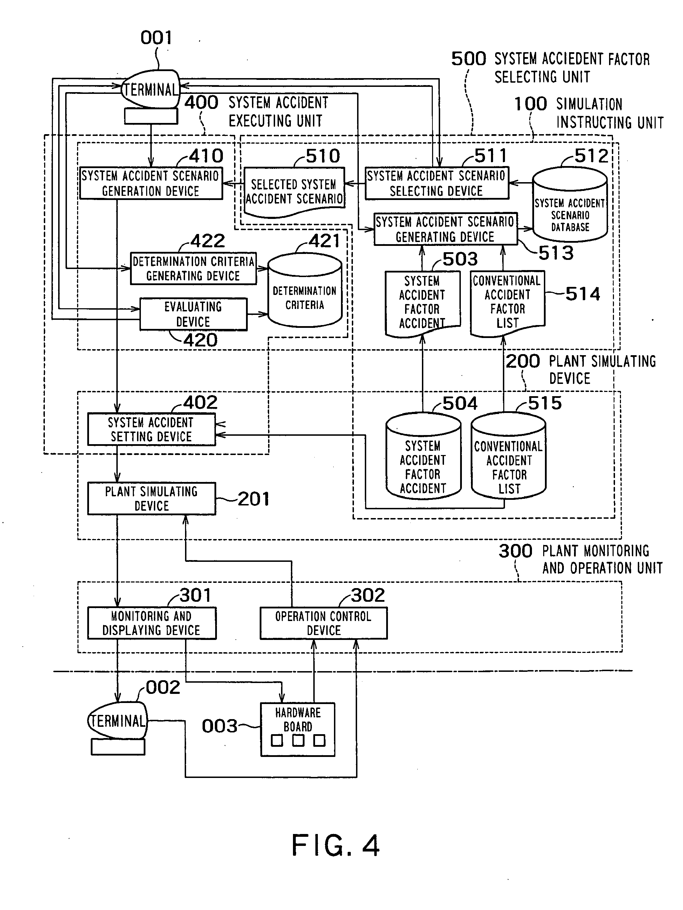

FIG. 4 is a block diagram showing the configuration of the seventh and eighth embodiments of the invention.

### (4-1) Seventh Embodiment

Referring to FIG. 4, when the terminal 001 for instructing simulation issues an evaluation demand at the time of system accident simulation, an evaluating device 420 lists all the criteria of system accident determination stored in a determination criteria database 421. Then it urges selection out of the list. When the terminal 001 for instructing simulation selects any system accident determination criteria, the plant parameters and the plant status are comparatively evaluated with the selected system accident determination criteria, and the result is displayed on the terminal 001 for instructing simulation.

This seventh embodiment can provide a plant simulator capable of giving an evaluation to the effect that, for instance, the plant parameters and the plant status at the time of simulating a system accident or a system accident scenario satisfy the determination criteria and accordingly are valid.

### (4-2) Eighth Embodiment

Also referring to FIG. 4, when the terminal 001 for instructing simulation issues a determination criteria generation demand, a determination criteria generating device 422 urges inputting of the plant parameters and the plant status, which are to serve as the determination criteria. And when they are inputted from the terminal 001 for instructing simulation and a generation demand is issued, the inputted plant parameters and plant status are stored into the determination criteria database 421. It is possible to store a plurality of sets of plant parameters and plant statuses.

This eighth embodiment can provide a plant simulator enabling the user to set as desired determination criteria for performing simulated evaluation of a system accident or a system accident scenario.

## Claims

1. A plant simulator comprising a plant simulation unit which simulates the behavior of a plant; a plant monitoring and operation unit which displays on a display screen parameters and the plant status computed by this plant simulation unit and, by using this display screen, gives the plant simulation unit the operation performed on the plant; and a simulation instructing unit which, connected to a terminal screen, gives the plant simulation unit the setting of initial values necessary for simulation from this terminal screen and a demand instruction, which may be to demand discontinuation of the execution of simulation, the plant simulator simulating a system accident according to a control model and a plant model, further comprising:
a system accident factor database in which action logics of system accident factors matching the control model are stored; a system accident factor selecting unit having a selecting device for taking out data stored in this system accident factor database; and
a system accident executing unit which executes a system accident on the basis of data taken out of the system accident factor selecting unit, whereby:
the system accident is simulated.

2. The plant simulator according to Claim 1, further comprising:
a system accident factor database storing defective logic data in the control model, wherein:
the system accident factor selecting unit replaces the control logic in the control model with defective logic data taken out of the system accident factor database, and a system accident due to the defectiveness of the control logic is simulated.

3. The plant simulator according to Claim 1, further comprising:
a system accident factor database storing defective control logic parameters in the control model, wherein:
the system accident factor selecting unit replaces the control logic parameters in the control model with defective control logic parameters taken out of the system accident factor database, and a system accident due to the defectiveness of the control logic parameters is simulated.

4. The plant simulator according to Claim 1, further comprising:
a system accident factor database storing data on defective plant constituent items in the plant model, wherein:
the system accident factor selecting unit replaces the plant constituent items in the plant model with defective plant constituent items, and a system accident due to the defectiveness of the plant constituent items is simulated.

5. The plant simulator according to Claim 1, further comprising:
a system accident factor database storing parameter data of plant constituent items in the plant model, wherein:
the system accident factor selecting unit simulates a system accident due to the defectiveness of the parameter of plant constituent items in the plant model.

6. The plant simulator according to Claim 1, wherein:
the system accident executing unit simulates a system accident scenario by generating a system accident event or events and a conventionally known plant accident event or events with such conditions as time and plant status attached to it.

7. The plant simulator according to Claim 1, wherein:
the system accident executing unit comprises:
an evaluating device which gives an evaluation to such an effect that the plant parameters and the plant status at the time of simulating a system accident or a system accident scenario satisfy determination criteria and accordingly are valid.

8. The plant simulator according to Claim 7, wherein:
the system accident executing unit comprises:
a determination criteria generating device which enables the user to set as desired determination criteria for performing simulated evaluation of a system accident or a system accident scenario.
